# EUROPÄISCHE PATENTSCHRIFT

(11) **EP 2 409 627 B1**
(45) Veröffentlichungstag und Bekanntmachung des Hinweises auf die Patenterteilung: **14.05.2014**
(21) Anmeldenummer: 11401529.0
(22) Anmeldetag: 08.06.2011
(51) Int. Cl.: A47L 9/00, B60B 33/00, B60B 19/00

(54) **Bodenstaubsauger mit auf Rollen fahrbarem Gehäuse**
Floor vacuum cleaner with housing on rollers
Aspirateur au sol doté d'un boîtier mobile sur rouleaux

(30) Priorität: 20.07.2010 EP 10401114
(43) Veröffentlichungstag der Anmeldung: 25.01.2012
(73) Patentinhaber: Miele & Cie. KG, 33332 Gütersloh (DE)
(72) Erfinder: Hunnekuhl, Christian, 49086 Osnabrück (DE)

(56) Entgegenhaltungen:
- WO-A1-2008/082338
- WO-A1-2009/037105
- WO-A2-2008/041956
- DE-A1-102008 009 617
- DE-U1-202008 001 142
- JP-A- 3 251 220
- US-A- 6 141 822

## Beschreibung

Die Erfindung betrifft einen Bodenstaubsauger mit einem Gehäuse, welches auf Rollen fahrbar ausgebildet ist, wobei die Rollen an Rollenachsen drehbar gelagert oder an drehbar gelagerten Rollenachsen gehalten werden.

Es ist grundsätzlich bekannt, Rollen von Staubsaugerfahrwerken aus einem Kunststoffkern herzustellen und diesen mit einem Überzug aus elastischen Material zu versehen, siehe beispielsweise DE-OS 28 24 033. Trotz des Überzugs werden die aus Bodenunebenheiten resultierenden Kräfte über die Rollen auf das Gehäuse übertragen und führen zu Geräuschen und materialschädigenden Erschütterungen, insbesondere beim Saugbetrieb auf Hartböden und beim Überfahren von Hindernissen wie Türschwellen, Fliesenfugen oder sogar des eigenen Netzanschlusskabels. Auch aus der GB 909,161 und aus der WO 03/001957 A1 sind Rollen mit einem elastischen Laufkörper bekannt.

Aus der WO 2008/082338 A1 ist ein Bodenpflegegerät bekannt mit einem Rad bekannt, welches dem Oberbegriff des Anspruchs 1 entspricht. Das dort offenbarte Rad zeigt, einen dämpfenden Reifen, der eine Luftkammer aus mehreren Zellen aufweist. Zur Verdrehsicherung ist die Lage mit den Luftkammern mit der Nabe des Rads durch eine Klebeschicht verbunden.

Der Erfindung stellt sich das Problem, bei einem Bodenstaubsauger der eingangs genannten Art Fahrgeräusche und fahrbedingte Erschütterungen noch besser zu dämpfen, sowie Relativbewegungen zwischen Nabe und Reifen zu vermeiden. Erfindungsgemäß wird dieses Problem durch einen Bodenstaubsauger mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich dadurch, mindestens eine der Rollen eine harte Nabe und einen dämpfenden Reifen umfasst, und dass der elastische Reifen als luftgefüllter Pneu ausgebildet ist. Hierdurch wird einerseits eine wirksame Geräuschdämpfung beim Fahren des Bodenstaubsaugers erzielt, andererseits wird auch die Übertragung von Geräuschen des Staubsaugergebläses auf den Fußboden und eine damit verbundene Resonanzbildung verhindert. Außerdem werden Erschütterungen, die durch Bodenunebenheiten beim Fahrbetrieb entstehen, gedämpft auf das Gehäuse übertragen.

Zur einfachen Montage ist es zweckmäßig, wenn die Nabe an ihren Enden radial gerichtete Kragen umfasst, welche den Reifen formschlüssig aufnehmen.

Beim Überfahren von Schwellen und anderen Hindernissen kann es zu einer Relativbewegung zwischen Nabe und Reifen kommen. Um dies zu vermeiden, ist es vorteilhaft, wenn zwischen der Nabe und dem Reifen eine Verdrehsicherung angeordnet ist. Diese kann dadurch realisiert werden, dass mindestens ein Kragen und mindestens eine radial gerichtete Flanke des Reifens Verzahnungen besitzen, die ineinander eingreifen.

Hierdurch ergibt sich ein Formschluss zwischen Nabe und Reifen. Die Verzahnungen können wenigstens auf einem Teilkreis angeordnet sein, vorteilhaft sind vollständig umlaufende Verzahnungen. Es ist außerdem vorteilhaft, wenn am Kragen und an der Flanke Nuten und/oder Stege angeordnet sind, die den Kragen und die Flanke in der verzahnten Position halten. In einfachster Weise können die Nuten und/oder Stege konzentrisch zu den Verzahnungen angeordnet sein.

Die Montage wird auch dadurch erleichtert, dass die Nabe aus zwei Teilen besteht, von denen jedes einen Kragen beinhaltet. Die beiden Teile können identisch ausgebildet sein, um eine Verwechslung zu vermeiden. Sie werden in einfachster Weise durch eine Verrastung verbunden, die dann durch Einfügen einer Rollenachse in die Nabe arretierbar ist.

Es ist außerdem besonders vorteilhaft, wenn mindestens eine Rollenachse gegenüber dem Gehäuse gedämpft gelagert ist. Insbesondere, wenn die Rollenachse von einer drehbar am Gehäuse gelagerten Gleitkufe aufgenommen wird, sollte einer Gleitkufenachse ein Dämpfungselement zugeordnet sein. Hierdurch werden einerseits die Erschütterungen und Schwingungen auf der Strecke Rad ― Gehäuse zusätzlich gedämft, andererseits werden Erschütterungen, die direkt auf die Gleitkufe wirken, beispielsweise beim Überfahren von hohen Hindernissen, nicht direkt an das Gehäuse weitergegeben. Eine Dämpfung der Rollenachse gegenüber dem Gehäuse kann auch für sich allein, d. h. ohne Rollen mit dämpfenden Eigenschaften sinnvoll sein.

Zweckmäßige Ausgestaltungen sehen vor, dass die am Gehäuse befestigte Gleitkufenachse unter Zwischenlage einer Aufnahmehülse in der Gleitkufe angeordnet ist, wobei das Dämpfungselement zwischen Aufnahmehülse und Gleitkufe angeordnet ist, oder dass die am Gehäuse befestigte Gleitkufenachse unter Zwischenlage des Dämpfungselements in der Gleitkufe angeordnet ist. In beiden Fällen ist es vorteilhaft, wenn die Aufnahmehülse oder die Gleitkufenachse mit axialem Spiel in der Gleitkufe aufgenommen ist. Hierdurch entfaltet das Dämpfungselement eine ideale Wirkung.

Ein Ausführungsbeispiel der Erfindung ist in den Zeichnungen rein schematisch dargestellt und wird nachfolgend näher beschrieben. Es zeigt
- Figur 1: den hinteren Bereich eines Bodenstaubsaugers,
- Figur 2: einen Schnitt durch eine Gleitkufe mit einer Rolle im Bereich der Rollenachse,
- Figur 3: die Seitenansicht eines Reifens und einer Nabe bei einem weiteren Ausführungsbeispiel einer Rolle,
- Figur 4: einen Teilschnitt durch die Rolle gemäß Figur 3 in perspektivischer Darstellung,
- Figur 5: einen Längsschnitt im Bereich der Rollenachse durch die Rolle gemäß Figur 3,
- Figur 6: einen Längsschnitt durch ein erstes Ausführungsbeispiel einer Gleitkufe im Bereich der Gleitkufenachse,
- Figur 7: einen Schnitt durch ein zweites Ausführungsbeispiel einer Gleitkufe im Bereich der Gleitkufenachse.

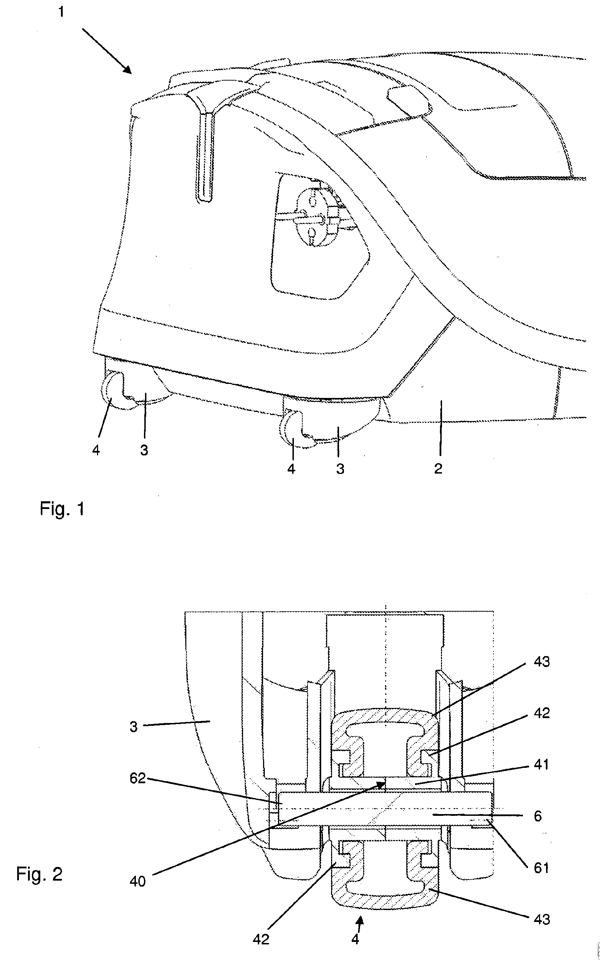

In der Figur 1 ist in einer perspektivischen Darstellung der hintere Bereich eines Bodenstaubsaugers 1 gezeigt. Dort ist erkennbar, dass an einem Gehäuseunterteil 2 im hinteren Bereich zwei Gleitkufen 3 mit Rollen 4 angeordnet sind. Im vorderen Bereich ist eine weitere Gleitkufe, ebenfalls mit einer Rolle ausgestattet, angeordnet, die hier in der Zeichnung aber nicht erkennbar ist.

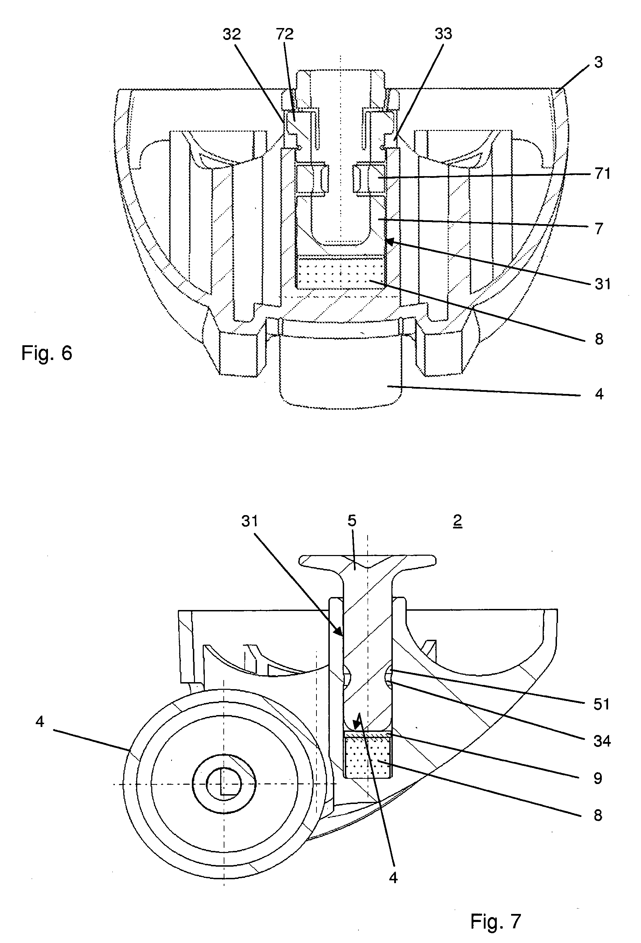

Die Gleitkufen 3 sind an dem Gehäuseunterteil 2 um eine in Gebrauchsstellung des Bodenstaubsaugers vertikale Achse drehbar gelagert. Hierzu sind an dem Gehäuseunterteil 2 drei Gleitkufenachsen 5 befestigt (siehe Figur 7). Die Anordnung der Gleitkufenachsen 5 innerhalb der Gleitkufen 3 ist weiter hinten beschrieben.

Die Rollen 4 sind ebenfalls drehbar gelagert. Hier erfolgt die Lagerung an einer in Gebrauchsstellung waagerechten Rollenachse 6 (siehe Figur 2), welche mit ihren Enden 61 und 62 in der Gleitkufe 3 befestigt ist. Die waagerechte Drehlagerung der Rollenachsen 6 ermöglicht die Fahrbewegung des Bodenstaubsaugers 1, die senkrechte Drehlagerung der Gleitkufenachsen 5 eine Lenkbewegung.

Figur 2 zeigt ein erstes Ausführungsbeispiel einer Rolle 4 in der Gleitkufe 3 anhand eines Schnitts, der die Rolle im Bereich der Rollenachse 6 teilt. Es ist erkennbar, dass die Rolle 4 eine Nabe 40 besitzt, die mit einem hülsenförmigen Abschnitt 41 die Achse 6 umgibt. An den hülsenförmigen Abschnitt 41 schließen sich an dessen Enden jeweils radial gerichtete und dann nach innen abgewinkelte Kragen 42 an. Die gesamte Nabe 40 ist aus einem Hartkunststoff wie PE (Polyethylen) hergestellt und zweiteilig aufgebaut. Die Verbindung der beiden Nabenhälften kann durch geeignete Mittel wie Schweißen, Kleben oder Verrasten erfolgen. Mittels der Kragen wird ein hohler Reifen 43 aus einem Elastomermaterial wie EPDM (Ethylen-Propylen-Dien-Kautschuk) formschlüssig gehalten. Auf diese Weise entsteht ein luftgefüllter Pneu, der eine dämpfende Eigenschaft aufweist. Die dämpfende Wirkung ist über die Eigenschaften der Elastomermischung einstellbar. Weiterhin ist der Rollendurchmesser gegenüber dem bekannter Gleitkufenrollen vergrößert worden. Hierdurch wird das Überfahren von größeren Hindernissen wie dem Netzanschlusskabel (nicht dargestellt) des Bodenstaubsaugers 1 erleichtert, weil der Winkel der Tangente zwischen Rolle 4 und Hindernis gegenüber der Horizontalen verringert wird und demzufolge die notwendige Zugkraft zum Anheben des Bodenstaubsaugers 1 kleiner ist.

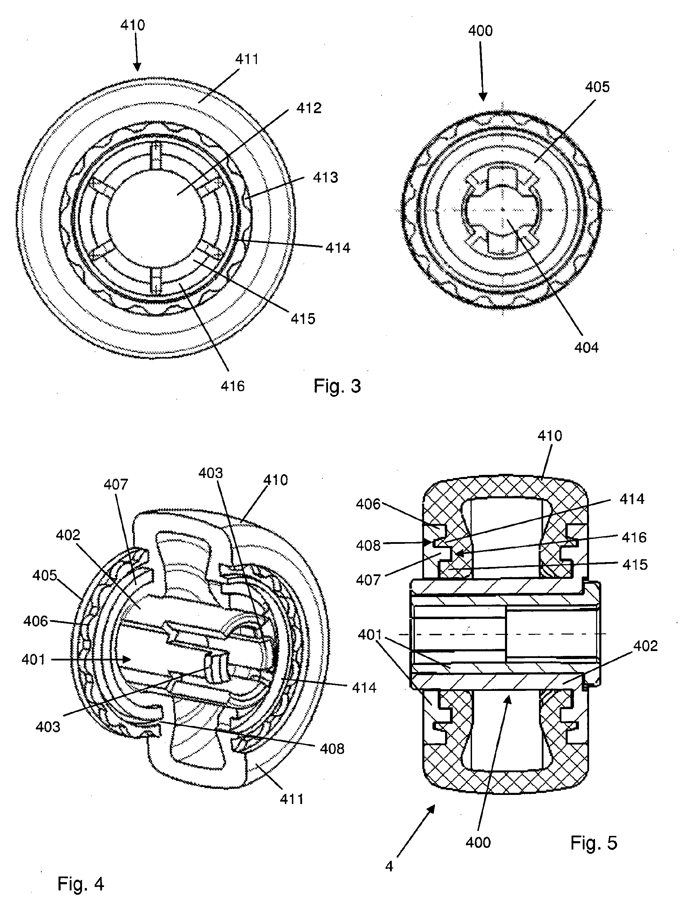

Bei der Ausführungsform der Rolle 4 nach Figur 2 kann es beim Überfahren von Schwellen und anderen Hindernissen zu einer Relativbewegung zwischen Nabe 40 und Reifen 43 kommen. Dadurch entsteht einerseits Abrieb, andererseits wird der Reifen 43 gewalkt und dehnt sich aus. Der Reifen 43 löst sich dann von der Nabe 40 und der Verschleiß nimmt zu. Das auftretende Spiel zwischen den Komponenten kann dann zu einem seitlichen Ausweichen des Reifens 43 führen, so dass das Rad sich beim Manövrieren des Bodenstaubsaugers 1 nicht mehr dreht. Die Figuren 3 bis 5 zeigen eine Ausführungsform einer Rolle 4, bei der eine Relativbewegung zwischen Nabe 400 und Reifen 401 unterbunden wird. In Figur 3 sind Nabe 400 und Reifen 410 einer solchen Rolle 4 dargestellt. Es ist erkennbar, dass eine Flanke 411 des Reifens 410 konzentrisch zur Öffnung 412 eine umlaufende Verzahnung 413 besitzt. Konzentrisch zur Verzahnung 413 und näher zur Öffnung 412 sind aus dem EPDM-Material zwei Stege 414 und 415 ausgebildet, die zwischen sich eine Nut 416 einschließen. Figur 4 zeigt einen geschnittenen Reifen, in dessen Öffnung ein erstes Nabenteil 401 gesteckt ist. Das Teil 401 umfasst einen hülsenförmigen Abschnitt 402 mit zwei Rasthaken 403. An das den Rasthaken 403 gegenüberliegende Ende ist ein Kragen 405 angeformt. Dieser besitzt auf der Innenseite eine umlaufende Verzahnung 406, die in die Verzahnung 413 des Reifens 410 eingreift und eine Verdrehsicherung bildet. Konzentrisch zur Verzahnung 406 des Kragens 405 näher zum hülsenförmigen Teil 402 ist ein umlaufender Steg 407 angeformt. Dieser bildet zusammen mit der Verzahnung 406 eine weitere Nut 408. Zwischen Reifen 410 und Kragen 400 ergibt sich dann im zusammengebauten Zustand (siehe Figur 5) eine wechselseitige Aneinanderreihung von Nuten 408, 416 und Stegen 407, 414, 415. Hierdurch wird der Formschluss zwischen den beiden Verzahnungen 406 und 413 gesichert und ein Lösen des Reifens 410 von der Nabe 400 verhindert. Außerdem erhöhen die Stege 414 und 415 die Stabilität des Reifens 410. Zum Zusammenbau der Rolle 4 werden die beiden Nabenteile 401 und 409 um 90° verdreht unter Zwischenlage des Reifens 410 ineinandergesteckt und zusammengedrückt, bis die Rasthaken 403 durch die Öffnung 403 des jeweils anderen Kragens 405 stoßen und verrasten. Die Rastverbindung ist zunächst noch lösbar, wird aber durch das Einstecken der Rollenachse 6 gesichert. Figur 5 zeigt die Rolle 4 im zusammengebauten Zustand.

Zusätzlich zur dämpfenden Rolle selbst ist auch die Gleitkufe 3 und damit die Rollenachse 6 gegenüber dem Gehäuseunterteil 2 gedämpft gelagert. Dadurch werden auch Stöße auf die Gleitkufe 3 nicht ungedämpft an das Gehäuseunterteil 2 weitergegeben. Figur 6 zeigt ein erstes Ausführungsbeispiel einer solchen Dämpfung. Die an dem Gehäuseunterteil 2 befestigte Gleitkufenachse 5 (wie in Figur 7 dargestellt) wird drehbar in einer Aufnahmehülse 7 verrastet. Hierzu greifen zwei federnde Vorsprünge 71 an der Hülse 7 in eine Nut 51 an der Achse 5. Die Aufnahmehülse 7 wird dann in eine Bohrung 31 in der Gleitkufe 3 geschoben, in welche zuvor ein plättchenförmiges Dämpfungselement 8 eingelegt wurde. Das Dämpfungselement 8 besteht aus Polyurethan. Die Aufnahmehülse 7 ist ebenfalls über eine Verrastung (Rastvorsprünge 72 und Nut 32) in der Gleitkufe 3 befestigt, hier ist allerdings ausreichend axiales Spiel 33 vorhanden, so dass die Hülse 7 das Dämpfungselement 8 stauchen kann und die Kraftübertragung zwischen Gleitkufe 3 und Gehäuseunterteil 2 gedämpft erfolgt.

Eine weitere Möglichkeit zur Dämpfung der Gleitkufenachse 5 gegenüber dem Gehäuseunterteil 2 ist in Figur 7 dargestellt. Hier ist die Gleitkufe 3 einteilig aufgebaut und die Gleitkufenachse 5 direkt in der Bohrung 31 verrastet. Dementsprechend sind Rastvorsprünge 34 direkt an der Wand der Bohrung 31 angeordnet und greifen in die Nut 51. Die Nut 51 ist breiter als die Rastvorsprünge 34, so dass sich auch hier ein axiales Spiel ergibt. In die Bohrung 31 ist zuerst ein Dämpfungselement 8 in Form einer Polyurethanscheibe und darauf eine dünne Scheibe 9 aus einem stark verschleißfesten und selbstschmierenden Polymer wie UHMW PE (ultrahochmolekulares Polyethylen) eingelegt. Die Polyurethanscheibe 8 dämpft die spielbedingten Bewegungen der Gleitkufenachse 5, die Polymerscheibe 9 verhindert, dass die Stirnfläche 52 der Achse 5 bei Drehungen am Polyurethan 8 reibt.

## Patentansprüche

1. Bodenstaubsauger (1) mit einem Gehäuse, welches auf Rollen (4) fahrbar ausgebildet ist, wobei die Rollen (4) an Rollenachsen (6) drehbar gelagert oder an drehbar gelagerten Rollenachsen gehalten werden, wobei mindestens eine der Rollen (4) eine harte Nabe (40, 400) und einen dämpfenden Reifen (43, 410) umfasst, und dass der elastische Reifen (43, 410) als luftgefüllter Pneu ausgebildet ist, und
dass die Nabe (40, 400) an ihren Enden radial gerichtete Kragen (42, 405) umfasst, welche den Reifen (43, 410) formschlüssig aufnehmen, und dass zwischen der Nabe (400) und dem Reifen (410) eine Verdrehsicherung angeordnet ist, **dadurch gekennzeichnet, dass** mindestens ein Kragen (42, 405) und mindestens eine radial gerichtete Flanke (411) des Reifens (410) Verzahnungen (406, 413) besitzen, die ineinander eingreifen.

2. Bodenstaubsauger (1) nach Anspruch 4,
**dadurch gekennzeichnet,**
**dass** die Verzahnungen (406, 413) wenigstens auf einem Teilkreis angeordnet sind.

3. Bodenstaubsauger (1) nach Anspruch 5,
**dadurch gekennzeichnet,**
**dass** am Kragen (405) und an der Flanke (411) Nuten (408, 416) und/oder Stege (407, 414, 415) angeordnet sind, die den Kragen (405) und die Flanke (411) in der verzahnten Position halten.

4. Bodenstaubsauger (1) nach Anspruch 6,
**dadurch gekennzeichnet,**
**dass** die Nuten (408, 416) und/oder Stege (407, 414, 415) konzentrisch zu den Verzahnungen (406, 413) angeordnet sind.

5. Bodenstaubsauger (1) nach mindestens einem der vorhergehenden Ansprüche,
**dadurch gekennzeichnet,**
**dass** die Nabe (40, 400) aus zwei Teilen (401, 409) besteht, von denen jedes einen Kragen (42, 405) beinhaltet.

6. Bodenstaubsauger (1) nach Anspruch 8,
**dadurch gekennzeichnet,**
**dass** die beiden Teile (401, 409) identisch ausgebildet sind.

7. Bodenstaubsauger (1) nach Anspruch 9,
**dadurch gekennzeichnet,**
**dass** jedes Teil (401, 409) mit dem Kragen (405) des jeweils anderen Teils (401, 409) verrastbar ist.

8. Bodenstaubsauger (1) nach Anspruch 10,
**dadurch gekennzeichnet,**
**dass** die Verrastung durch Einfügen einer Rollenachse (6) in die Nabe (400) arretierbar ist.

## Claims

1. Floor-type vacuum cleaner (1) comprising a housing which is designed so as to be moveable on rollers (4), the rollers (4) being rotatably mounted on roller axles (6) or being held on rotatably mounted roller axles, at least one of the rollers (4) comprising a hard hub (40, 400) and a damping tyre (43, 410), and the resilient tyre (43, 410) being formed as an air-filled tyre, and the hub (40, 400) comprising radially oriented collars (42, 205) on the ends thereof, which collars receive the tyre (43, 410) in an interlocking manner, and anti-twist protection being arranged between the hub (400) and the tyre (410),
**characterised in that** at least one collar (42, 405) and at least one radially oriented flank (411) of the tyre (410) have toothings (406, 413) which engage with one another.

2. Floor-type vacuum cleaner (1) according to claim 4,
**characterised in that**
the toothings (406, 413) are arranged at least over part of a circle.

3. Floor-type vacuum cleaner (1) according to claim 5,
**characterised in that**
grooves (408, 416) and/or ribs (407, 414, 415) are arranged on the collar (405) and the flank (411) and hold the collar (405) and the flank (411) in the toothed position.

4. Floor-type vacuum cleaner (1) according to claim 6,
**characterised in that**
the grooves (408, 416) and/or ribs (407, 414, 415) are arranged concentrically with the toothings (406, 413).

5. Floor-type vacuum cleaner (1) according to at least one of the preceding claims,
**characterised in that**
the hub (40, 400) consists of two parts (401, 409), each of which includes a collar (42, 405).

6. Floor-type vacuum cleaner (1) according to claim 8,
**characterised in that**
that the two parts (401, 409) are identical.

7. Floor-type vacuum cleaner (1) according to claim 9,
**characterised in that**
each part (401, 409) can latch with the collar (405) of the respective other part (401, 409).

8. Floor-type vacuum cleaner (1) according to claim 10,
**characterised in that**
the latching can be locked by inserting a roller axle (6) into the hub (400).

## Revendications

1. Aspirateur-traîneau (1) avec un carter qui est constitué de façon déplaçable sur des roulettes (4), les roulettes (4) étant supportées en rotation sur des essieux de roulettes (6) ou étant retenues sur des essieux de roulettes supportés en rotation, au moins une des roulettes (4) comprenant un moyeu (40, 400) dur et un pneu (43, 410) amortissant, et le pneu (43, 410) élastique étant constitué en tant que pneu rempli d'air, et le moyeu (40, 400) comprenant à ses extrémités des collerettes (42, 405) dirigées radialement qui reçoivent par liaison de forme le pneu (43, 410), et un blocage anti-torsion étant disposé entre le moyeu (400) et le pneu (410),
**caractérisé en ce**
**qu'**au moins une collerette (42, 405) et au moins un flanc (411), dirigé radialement, du pneu (410) possède des dentures (406, 413) qui engrènent réciproquement.

2. Aspirateur-traîneau (1) selon la revendication 4,
**caractérisé en ce que**
les dentures (406, 413) sont disposées sur au moins une portion de cercle.

3. Aspirateur-traîneau (1) selon la revendication 5,
**caractérisé en ce que**,
sur la collerette (405) et sur le flanc (411), il est disposé des rainures (408, 416) et/ou des nervures (407, 414, 415) qui retiennent la collerette (405) et le flanc (411) dans la position engrenée.

4. Aspirateur-traîneau (1) selon la revendication 6,
**caractérisé en ce que**
les rainures (408, 416) et/ou les nervures (407, 414, 415) sont disposées de façon concentrique par rapport aux dentures (406, 413).

5. Aspirateur-traîneau (1) selon une des revendications précédentes,
**caractérisé en ce que**
le moyeu (40, 400) se compose de deux parties (401, 409) dont chacune contient une collerette (42, 405).

6. Aspirateur-traîneau (1) selon la revendication 8,
**caractérisé en ce que**
les deux parties (401, 409) sont constituées de façon identique.

7. Aspirateur-traîneau (1) selon la revendication 9,
**caractérisé en ce que**
chaque partie (401, 409) peut s'encliqueter avec la collerette (405) de l'autre partie (401, 409) respective.

8. Aspirateur-traîneau (1) selon la revendication 10,
**caractérisé en ce que**
l'encliquetage peut être bloqué par l'insertion d'un essieu de roulettes (6) dans le moyeu (400).
